# EUROPÄISCHE PATENTSCHRIFT

(11) **EP 3 161 930 B1**
(45) Veröffentlichungstag und Bekanntmachung des Hinweises auf die Patenterteilung: **10.03.2021**
(21) Anmeldenummer: 15757175.3
(22) Anmeldetag: 14.08.2015
(51) Int. Cl.: H02M 5/10, H02M 7/483

(54) **ANORDNUNG ZUM ANSCHLIESSEN EINER BAHNSTROMVERSORGUNG FÜR EINE BAHNSTRECKE AN EIN DREIPHASIGES VERSORGUNGSNETZ**
ARRANGEMENT FOR CONNECTING A RAILWAY POWER SUPPLY FOR A RAILWAY TRACK TO A THREE-PHASE SUPPLY NETWORK
MONTAGE POUR CONNECTER UNE ALIMENTATION ÉLECTRIQUE DE VOIE DESTINÉE À UNE VOIE, À UN RÉSEAU D'ALIMENTATION TRIPHASÉ

(30) Priorität: 29.08.2014 DE 102014217300
(43) Veröffentlichungstag der Anmeldung: 03.05.2017
(73) Patentinhaber: Siemens Mobility GmbH, 81739 München (DE)
(72) Erfinder: BRAUN, Wolfgang, 96191 Viereth-Trunstadt (DE); GRUBER, Rainer, 91560 Heilsbronn (DE)
(86) Internationale Anmeldenummer: PCT/EP2015/068733
(87) Internationale Veröffentlichungsnummer: WO 2016/030212

(56) Entgegenhaltungen:
- EP-A1- 0 026 374
- WO-A1-2007/011230
- DE-A1-102008 012 325

## Beschreibung

Die Erfindung betrifft eine Anordnung zum Anschließen einer Bahnstromversorgung für eine Bahnstrecke an ein dreiphasiges Versorgungsnetz gemäß dem Oberbegriff des Anspruch 1.

Bei einer Bahnstromversorgung kommen häufig einphasige Oberleitungssysteme zum Einsatz, deren elektrische Energie aus herkömmlichen dreiphasigen Versorgungsnetzen entnommen werden muss.

Aus dem Fachbuch "Fahrleitungen elektrischer Bahnen" von F. Kießling, R. Puschmann und A. Schmieder, 3. Auflage aus dem Jahr 2014, sind aus den Seiten 76 bis 85 verschiedene Anschlussmöglichkeiten der Bahnstromversorgung an ein dreiphasiges Versorgungsnetz bekannt. So kann bei einer so genannten Einphasenbahn die nötige Spannung jeweils für einzelne Abschnitte der Bahnstromversorgung abwechselnd aus einzelnen Außenleitern eines dreiphasigen Versorgungsnetzes entnommen werden (Bild 1.29 auf Seite 77). Dies verursacht Unsymmetrien in der Belastung des dreiphasigen Versorgungsnetzes. Weiterhin ist eine so genannte Zweispannungs-Bahnstromversorgung (Bild 1.30 auf Seite 78, Text Seite 78 ff) beschrieben, bei der Autotransformatoren eingesetzt werden.

Bei dem bekannten Autotransformatorsystem werden in einem Unterwerk der Bahnstromversorgung mittels Transformatoren aus einem dreiphasiges Versorgungsnetz für je einen Fahrleitungsabschnitt eine Fahrleitung, der sogenannte "positive Feeder", und ein entlang der Bahnstrecke isoliert mitgeführter Leiter, der sogenannte "negative Feeder", gespeist. An das Unterwerk ist die Schiene, die Erdpotential aufweist, angeschlossen. Entlang des Fahrleitungsabschnitts befindet sich mindestens ein Autotransformator, der mit den beiden Leitern und an seiner Mittelanzapfung mit der Schiene verbunden ist. Wird der Fahrleitungsabschnitt durch ein Triebfahrzeug befahren, so entnimmt das Triebfahrzeug einen ersten Speisestrom aus Richtung des Unterwerks und einen zweiten Speisestrom aus Richtung des Fahrleitungsabschnittendes. Die beiden Speiseströme sind gegeneinander um 180° phasenverschoben.

Autotransformatorsysteme werden zur Bahnstromversorgung eingesetzt, weil sich über weite Strecken die Belastungsströme der Fahrleitung halbieren und damit auch die entsprechenden Spannungsabfälle verringern. Dadurch können bei Autotransformatorsystemen in der Bahnstromversorgung die Abstände von Unterwerken an der Bahnstrecke erhöht werden, was Kosten einspart. Außerdem werden Störeinflüsse auf Fernmeldeleitungen verringert.

Weiterhin ist aus der DE102008012325 A1 eine gattungsgemäße Anordnung bekannt. Die Anordnung dient zum Anschließen mindestens einer einphasigen Versorgungsleitung für die Oberleitung einer Eisenbahnstrecke an ein dreiphasiges Versorgungsnetz, wobei mindestens ein Transformator primärseitig mit dem Versorgungsnetz und sekundärseitig mit der mindestens einen einphasigen Versorgungsleitung und mit einem Erdungspunkt oder mit einer Rückleitung in Verbindung steht. Der Transformator weist in diesem Fall sowohl primärseitig als auch sekundärseitig jeweils drei Phasen auf. Mit der mindestens einen einphasigen Versorgungsleitung und mit dem Erdungspunkt steht eine Symmetriereinrichtung in Verbindung, die eine sogenannte Schieflast bzw. eine unsymmetrische elektrische Belastung der drei Phasen des Versorgungsnetzes vermindert. Die Symmetriereinrichtung ist als ein dreiphasiger selbstgeführter Spannungszwischenkreisstromrichter ausgeführt. Weiterhin ist es möglich, zwei Transformatoren an das dreiphasige Versorgungsnetz zu schalten, um mittels der Symmetriereinrichtung zwei unterschiedliche Oberleitungsabschnitte zu speisen. Die beiden Transformatoren weisen in diesem Fall sowohl primärseitig als auch sekundärseitig zwei Phasen auf.

Ferner ist aus der Produktbeschreibung "SVC PLUS - System Description" der Siemens AG vom 08. März 2012 eine Symmetriereinrichtung bekannt. Es wird ein so genannter modularer Multi-Level-Umrichter für die Blindleistungskompensation eingesetzt.

Ausgehend von der DE102008012325 A1 stellt sich an die Erfindung die Aufgabe, eine Anordnung zum Anschließen einer Bahnstromversorgung für eine Bahnstrecke an ein dreiphasiges Versorgungsnetz anzugeben, mit dem vergleichsweise einfach und effizient zwei Fahrleitungsabschnitte eines Autotransformatorsystems mit elektrischer Energie gespeist und zugleich Unsymmetrien der elektrischen Belastung des dreiphasigen Versorgungsnetzes vermieden werden.

Die Erfindung löst diese Aufgabe durch eine Anordnung gemäß Anspruch 1.

Zwar erwähnt die DE102008012325 A1 in ihrer Beschreibungseinleitung, dass die in diesem Dokument beschriebene einphasige Versorgungsleitung der Bahnstromversorgung Teil eines Autotransformatorsystems sein kann, es bleibt jedoch offen, wie der Dreiphasenwechselstrom-Transformator hierfür eingesetzt werden müsste.

Es ist ein Vorteil der erfindungsgemäßen Anordnung, dass mit ihr in einer einfachen und effizienten Verschaltung von Dreiphasenwechselstrom-Transformator und Symmetriereinrichtung zwei unterschiedliche Fahrleitungsabschnitte gespeist werden können, wobei gleichzeitig Unsymmetrien in der elektrischen Belastung des dreiphasigen Versorgungsnetzes vermieden werden.

Ein weiterer Vorteil ist es, dass die Verwendung der Symmetriereinrichtung auf der Sekundärseite des Dreiphasenwechselstrom-Transformators, also auf der Mittelspannungsebene, besonders kostengünstig ist im Vergleich zum Einsatz einer Symmetriereinrichtung auf der Hochspannungsebene bzw. im dreiphasigen Versorgungsnetz.

In einer bevorzugten Ausführungsform der erfindungsgemäßen Anordnung ist der Dreiphasenwechselstrom-Transformator ein Dreiwicklungstransformator. Dies ist ein Vorteil, weil ein Dreiwicklungstransformator vergleichsweise einfach aufgebaut und weit verbreitet ist.

In einer weiteren bevorzugten Ausführungsform der erfindungsgemäßen Anordnung weist der Dreiphasenwechselstrom-Transformator primärseitig eine Sternschaltung auf. Dies ist ein Vorteil, weil diese Bauweise besonders einfach und platzsparend ist.

In einer weiteren bevorzugten Ausführungsform der erfindungsgemäßen Anordnung weist der Dreiphasenwechselstrom-Transformator sekundärseitig eine erste Dreiecksschaltung auf, die eine Phasenverschiebung der Spannung von 150° gegenüber der Primärseite bewirkt.

In einer weiteren bevorzugten Ausführungsform der erfindungsgemäßen Anordnung weist der Dreiphasenwechselstrom-Transformator sekundärseitig eine zweite Dreiecksschaltung auf, die eine Phasenverschiebung der Spannung von 330° gegenüber der Primärseite bewirkt. Dies ist ein Vorteil, weil sich auf diese Weise eine Phasenverschiebung zwischen Oberleitung und negative Feeder von 180° einstellt.

In einer weiteren bevorzugten Ausführungsform der erfindungsgemäßen Anordnung ist der Verbindungspunkt der ersten und der zweiten Dreiecksschaltung mit dem Erdpotential und mit der Symmetriereinrichtung verbunden. Dies ist vorteilhaft, weil sich auf diese Weise für die Energieversorgung der Bahnstrecke zwei gleich große Spannungen gegenüber dem Erdpotential einstellen (z.B. 2 x 25 kV) lassen, so dass die beiden Spannungen zueinander die doppelte Spannungsdifferenz aufweisen (z.B. 50 kV).

In einer weiteren bevorzugten Ausführungsform der erfindungsgemäßen Anordnung ist der Dreiphasenwechselstrom-Transformator mit seiner ersten Dreiecksschaltung mit der Symmetriereinrichtung verbunden und zur Speisung der zwei entlang der Bahnstrecke isoliert mitgeführten Leiter geeignet. Dabei ist die Symmetriereinrichtung zur Reduktion der Unsymmtrie in der elektrischen Belastung der Primärseite des Dreiphasenwechselstrom-Transformators, beispielsweise durch eine Blindleistungskompensation, ausgelegt. Dies ist ein Vorteil, da die erste Dreiecksschaltung, die die negative Feeder speist, elektrisch weniger stark belastet ist als die zweite Dreiecksschaltung.

In einer weiteren bevorzugten Ausführungsform der erfindungsgemäßen Anordnung ist der Dreiphasenwechselstrom-Transformator mit seiner zweiten Dreiecksschaltung zur Speisung der zwei Fahrleitungen geeignet. Dies ist ein Vorteil, da die zweite Dreiecksschaltung, die die Fahrleitungen speist, elektrisch stärker belastet ist als die erste Dreiecksschaltung.

In einer weiteren bevorzugten Ausführungsform der erfindungsgemäßen Anordnung weist der Dreiphasenwechselstrom-Transformator gemäß der Norm DIN VDE 0532 die Schaltgruppe YNd5d11 auf. Dies ist ein Vorteil, weil diese Schaltgruppe besonders gut für eine Speisung von je zwei negative und positive Feedern geeignet ist.

In einer weiteren bevorzugten Ausführungsform der erfindungsgemäßen Anordnung sind ein zusätzlicher Dreiphasenwechselstrom-Transformator und eine zusätzliche Symmetriereinrichtung derart verschaltet, dass die Anordnung zur Versorgung zweier elektrisch getrennter Fahrleitungsabschnitte mit je zwei Fahrleitungen mit Energie geeignet ist.

In einer Weiterbildung der vorgenannten Ausführungsform werden die zwei elektrisch getrennten Fahrleitungsabschnitte durch den zusätzlichen Dreiphasenwechselstrom-Transformator und/oder die zusätzliche Symmetriereinrichtung mit Energie versorgt, wenn ein Dreiphasenwechselstrom-Transformator und/oder eine Symmetriereinrichtung ausfallen. Dies ist ein Vorteil, weil bei Verwendung von zwei Dreiphasenwechselstrom-Transformatoren und zwei Symmetriereinrichtungen auch dann eine Speisung der beiden Fahrleitungsabschnitte möglich ist, wenn ein Dreiphasenwechselstrom-Transformator und/oder eine Symmetriereinrichtung ausfallen.

In einer weiteren bevorzugten Ausführungsform der erfindungsgemäßen Anordnung weist die Symmetriereinrichtung einen dreiphasigen selbstgeführten Spannungszwischenkreisstromrichter auf. Dies ist ein Vorteil, weil ein dreiphasiger selbstgeführter Spannungszwischenkreisstromrichter eine vergleichsweise platzsparende Bauweise ermöglicht.

In einer weiteren bevorzugten Ausführungsform der erfindungsgemäßen Anordnung weist die Symmetriereinrichtung einen modulareren Multi-Level-Umrichter auf. Dies ist ein Vorteil, weil ein modularer Multi-Level-Umrichter eine vergleichsweise große Stromrichterleistung mit einer vergleichsweise hohen Spannungsqualität ermöglicht.

Zur besseren Erläuterung der Erfindung zeigen die
- Figur 1: ein schematisches Schaltbild eines ersten Ausführungsbeispiels der erfindungsgemäßen Anordnung und
- Figur 2: ein Zeigerdiagramm, das die Phasenbeziehungen zwischen der Primärseite und der Sekundärseite eines im ersten Ausführungsbeispiel verwendeten Dreiphasenwechselstrom-Transformators darstellt und
- Figur 3: ein schematisches Schaltbild eines zweiten Ausführungsbeispiels der erfindungsgemäßen Anordnung und
- Figur 4: ein Schaltbild eines Dreiphasenwechselstrom-Transformators gemäß dem zweiten Ausführungsbeispiel.

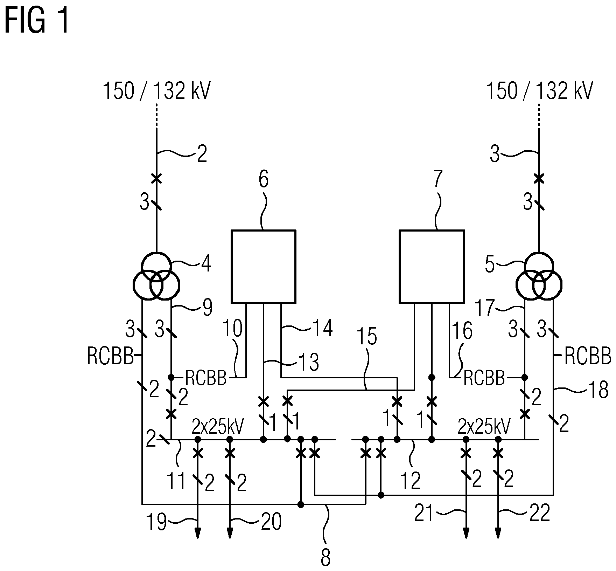

Die Figur 1 zeigt eine Anordnung 1, bei der ein dreiphasiges Versorgungsnetz 2, 3 mit z.B. 150kV oder 132kV jeweils an die Primärseite zweiter Dreiphasenwechselstrom-Transformatoren 4, 5 angeschlossen ist. Es handelt sich bei der Darstellung um ein vereinfachtes so genanntes Single Line Diagramm, d.h. eine dreiphasige Leitung ist als eine einzelne Linie dargestellt, die mit einem durchkreuzten Strich und einer 3 gekennzeichnet ist. Entsprechend ist eine zweiphasige Verbindung mit einer 2 gekennzeichnet. Weiterhin sind zwei Symmetriereinrichtungen 6, 7 und ein Erd- beziehungsweise Schienenpotenzial RCBB vorhanden. Die Anordnung weist zwei Sammelschienen 11, 12 auf, wobei an jede Sammelschiene 11, 12 je zwei Fahrleitungen (OCL) 19, 20, 21, 22 angeschlossen sind.

Im Folgenden soll nun die Verschaltung der genannten Elemente näher erläutert werden. Auf der Sekundärseite des links dargestellten Transformators 4 geht eine erste dreiphasige Leitung 8 ab, bei der eine Phase auf Erdpotenzial RCBB geschaltet ist und die verbleibenden zwei Phasen den Sammelschienen 11,12 zugeführt werden. Eine zweite dreiphasige Leitung 9 ist mit dem Erdpotenzial und über die verbleibenden zwei Phasen mit den Sammelschienen 11, 12 verbunden. An das Erdpotenzial ist über eine Leitung 10 die Symmetriereinrichtung 6 angeschlossen, die über eine Leitung 13 mit der Sammelschiene 11 verbunden ist. Durch die Leitung 14 ist die erste Symmetriereinrichtung 6 mit der Sammelschiene 12 verbunden.

Eine zweite Phase wird der Sammelschiene 11 über die Leitung 15 durch die zweite Symmetriereinrichtung 7 zugeführt. Der Sammelschiene 12 wird auch durch die Symmetriereinrichtung 7 eine weitere Phase zugeführt wird. Die dritte Phase der Symmetriereinrichtung 7 ist über die Leitung 16 mit dem Erdpotenzial RCBB verbunden. Auf der Sekundärseite des Transformators 5 geht eine dreiphasige Leitung 17 ab, von der eine Phase mit dem Erdpotenzial RCBB verbunden ist und die verbleibenden zwei Phasen der Sammelschiene 12 zugeführt werden. Weiterhin geht von dem Transformator 5 eine zweite dreiphasige Leitung 18 ab, von der eine Phase dem Erdpotenzial RCBB zugeführt wird und die verbleibenden zwei Phasen die Sammelschienen 11,12 speisen.

Es ist ein Vorteil der dargestellten Anordnung, dass die Speisung der Bahnstromversorgung auch dann noch aufrecht erhalten werden kann, wenn eine der beiden Symmetriereinrichtungen 6, 7 und/oder einer der beiden Transformatoren 4, 5 ausfällt. Die beiden Symmetriereinrichtungen sind in der dargestellten Ausführungsform parallel geschaltet.

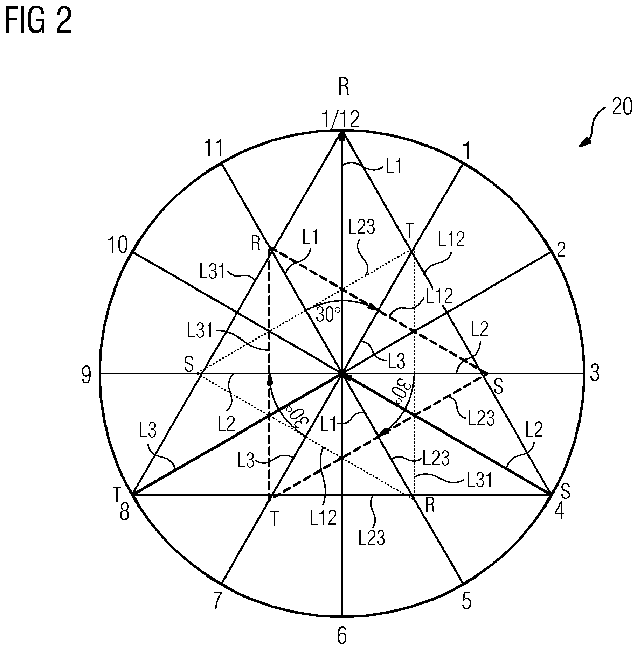

Die Figur 2 zeigt ein Zeigerdiagramm, welches die Phasenbeziehungen zwischen der sternförmig verschalteten Primärseite eines als Dreiwicklers gestalteten Dreiphasenwechselstrom-Transformators und zwei sekundärseitig angeordneten Dreiecksschaltungen wiedergibt. Dabei zeigt der außenliegende Kreis Winkelverschiebungen von je 30°, so dass zum Beispiel Zahl 3 für 3x30=90° Winkelverschiebung steht. R, S, T stehen für die drei Phasen der dreiphasigen Versorgungsleitung L1, L2, L3. Im Inneren des Kreises ist die sternförmige Verschaltung von L1, L2, L3 zu erkennen.

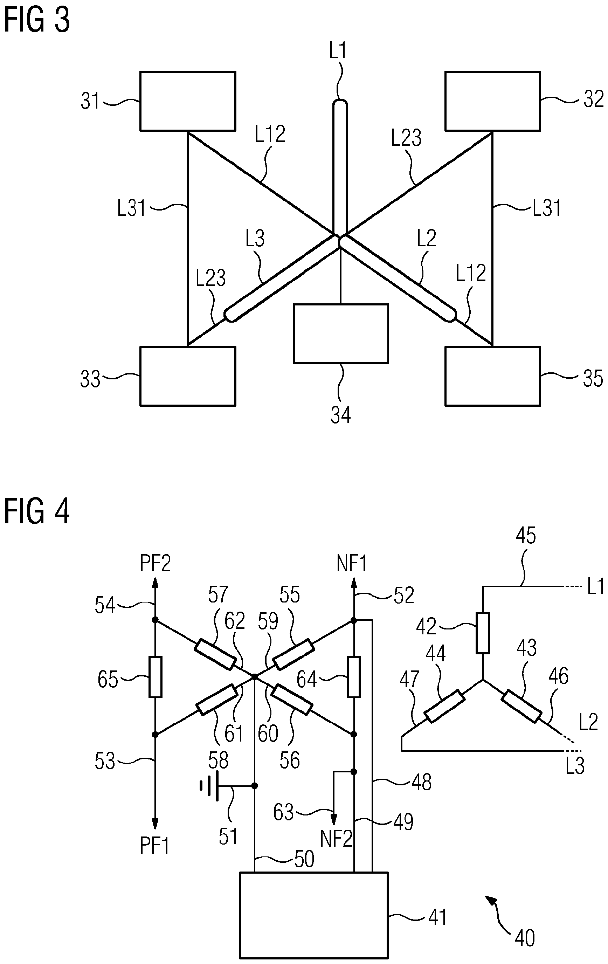

Eine erste Dreiecksschaltung (mit gestrichelten Linien dargestellt) auf der Sekundärseite besteht aus den drei Wicklungen L31, L23, L12. Eine zweite Dreiecksschaltung (mit gepunkteten Linien dargestellt) besteht aus den drei Wicklungen L23, L12, L31. Die beiden Dreiecke sind derart gegeneinander verschoben, dass jeweils 30° zwischen R der ersten Dreiecksschaltung und T der zweiten Dreiecksschaltung liegen, d.h. es ist eine Winkelverschiebung von 180° zwischen beiden Dreiecksschaltungen gegeben. Bei einer Verbindung der beiden mit S gekennzeichneten Punkte der ersten und der zweiten Dreiecksschaltung ergibt sich ein Schaltbild wie in der nachfolgenden Figur 3.

Das Schaltbild 3 gemäß Figur 3 zeigt die drei Wicklungen L1, L2, L3 der Primärseite des Dreiphasenwechselstrom-Transformators. Die drei Wicklungen L1, L2, L3 sind sternförmig verbunden, wobei der Berührungspunkt mit einer Rückleitung und einer Symmetriereinrichtung Verbindung steht (Bezugszeichen 34) .

Rechts im Schaltbild ist eine erste Dreiecksschaltung, bestehend aus den drei Wicklungen L12, L23, L31 zu sehen. Dabei ist der Berührungspunkt der Wicklungen L12 und L31 mit einem zweiten Negative Feeder NF2 und der Symmetriereinrichtung verbunden (Bezugszeichen 35). Der Berührungspunkt der beiden Wicklungen L23 und L31 ist mit einem ersten Negative Feeder NF1 und der Symmetriereinrichtung (Bezugszeichen 32) verbunden.

Links im Schaltbild ist eine zweite Dreiecksschaltung zu sehen, bestehend aus den drei Wicklungen L12, L31, und L23. An dem Berührungspunkt der beiden Wicklungen L12 und L31 ist eine erste Fahrleitung 31 angeschlossen. An dem Berührungspunkt der beiden Wicklungen L31 und L23 ist eine zweite Fahrleitung 33 angeschlossen.

Die Schaltgruppe des dargestellten Dreiphasenwechselstrom-Transformators ist YNd5d11.

Die Figur 4 zeigt eine Anordnung 40, bestehend aus Symmetriereinrichtung 41 und einem Dreiphasenwechselstrom-Transformator. Dabei weist der Dreiphasenwechselstrom-Transformator gemäß DIN VDE 0532 die Schaltgruppe YNd5d11 auf. An seiner Primärseite sind drei Wicklungen 42, 43, 44 sternförmig verbunden und an die drei Phasen L1, L2, L3 eines dreiphasigen Versorgungsnetzes angeschlossen. Auf der Sekundärseite ist eine erste Dreiecksschaltung vorhanden, bestehend aus den Wicklungen 55, 56 und 64. Der Kontaktpunkt der beiden Wicklungen 56 und 64 ist über eine Leitung 49 mit der Symmetriereinrichtung 41 verbunden. Derselbe Verbindungspunkt ist außerdem über die Leitung 63 mit einem zweiten Negative Feeder NF2 verbunden. Der Verbindungspunkt zwischen der Wicklung 55 und der Wicklung 64 steht über eine Leitung 52 mit einem ersten Negative Feeder NF1 sowie über eine Leitung 48 mit der Symmetriereinrichtung 41 in Verbindung. Der Kontaktpunkt der beiden Wicklungen 55 und 56 wird mittels der Leitung 50 herausgeführt und ist einerseits über eine Leitung 51 mit dem Erd- beziehungsweise Schienenpotenzial und andererseits mit der Symmetriereinrichtung 41 verbunden.

Weiterhin ist sekundärseitig eine zweite Dreiecksschaltung vorgesehen, bestehend aus den drei Wicklungen 57, 58, 65. Der Berührungspunkt der beiden Wicklungen 57 und 58 ist mit der Leitung 50 sowie dem Berührungspunkt der beiden Wicklungen 55 und 56 der ersten Dreiecksschaltung verbunden. An den Berührungspunkt der Wicklungen 57 und 65 ist über eine Leitung 54 ein zweiter Positive Feeder PF2 angeschlossen. An dem Berührungspunkt der Wicklungen 58 und 65 ist über die Leitung 53 ein erster Positive Feeder PF1 angeschlossen.

Durch die gezeigte Schaltgruppe YNd5d11 des Dreiphasenwechselstrom-Transformators und dessen Anschluss an die Negative Feeder NF1, NF2 sowie die Symmetriereinrichtung wird es möglich, in besonders effizienter Weise Unsymmetrien in der elektrischen Belastung der Wicklungen 42, 43, 44 auf der Primärseite des Transformators zu vermeiden.

## Patentansprüche

1. Anordnung (40) mit einer Bahnstromversorgung (PF1,PF2,NF1,NF2) für eine Bahnstrecke zum Anschließen an ein dreiphasiges Versorgungsnetz (L1,L2,L3),
wobei die Anordnung einen Dreiphasenwechselstrom-Transformator (42-44,55-62,64,65) und eine Symmetriereinrichtung (41) für eine gleichmäßige elektrische Belastung der drei Phasen des dreiphasigen Versorgungsnetzes (L1,L2,L3) aufweist,
wobei der Dreiphasenwechselstrom-Transformator (42-44,55-62,64,65) primärseitig mit dem dreiphasigen Versorgungsnetz (L1,L2,L3) verbindbar und sekundärseitig mit der Symmetriereinrichtung (41) verbunden ist, wobei
der Dreiphasenwechselstrom-Transformator (42-44,55-62,64,65) an die Bahnstromversorgung angeschlossen ist,
**dadurch gekennzeichnet, dass**
die Bahnstromversorgung ein Autotransformatorsystem mit zwei Fahrleitungen (PF1,PF2) und zwei entlang der Bahnstrecke isoliert mitgeführte Leiter (NF1,NF2) aufweist, wobei die zwei isoliert mitgeführten Leiter (NF1,NF2) mit der Symmetriereinrichtung (41) verbunden sind.

2. Anordnung nach Anspruch 1, **dadurch gekennzeichnet, dass** der Dreiphasenwechselstrom-Transformator ein Dreiwicklungstransformator (42-44,55-62,64,65) ist.

3. Anordnung nach Anspruch 1 oder 2, **dadurch gekennzeichnet, dass** der Dreiphasenwechselstrom-Transformator (42-44,55-62,64,65) primärseitig eine Sternschaltung (42-44) aufweist.

4. Anordnung nach Anspruch 2 oder 3, **dadurch gekennzeichnet, dass** der Dreiphasenwechselstrom-Transformator (42-44,55-62,64,65) sekundärseitig eine erste Dreiecksschaltung (55,56,64) aufweist, die eine Phasenverschiebung der Spannung von 150° gegenüber der Primärseite bewirkt.

5. Anordnung nach Anspruch 4, **dadurch gekennzeichnet, dass** der Dreiphasenwechselstrom-Transformator (42-44,55-62,64,65) sekundärseitig eine zweite Dreiecksschaltung (57,58,65) aufweist, die eine Phasenverschiebung der Spannung von 330° gegenüber der Primärseite bewirkt.

6. Anordnung nach Anspruch 5, **dadurch gekennzeichnet, dass** der Verbindungspunkt der ersten (55,56,64) und der zweiten Dreiecksschaltung (57,58,65) mit dem Erdpotential (51) und mit der Symmetriereinrichtung (41) verbunden ist.

7. Anordnung nach einem der Ansprüche 4 bis 6, **dadurch gekennzeichnet, dass** der Dreiphasenwechselstrom-Transformator (42-44,55-62,64,65) mit seiner ersten Dreiecksschaltung (55,56,64) mit der Symmetriereinrichtung (41) verbunden und zur Speisung der zwei entlang der Bahnstrecke isoliert mitgeführten Leiter (NF1,NF2) geeignet ist.

8. Anordnung nach einem der Ansprüche 5 bis 7, **dadurch gekennzeichnet, dass** der Dreiphasenwechselstrom-Transformator (42-44,55-62,64,65) mit seiner zweiten Dreiecksschaltung (57,58,65) zur Speisung der zwei Fahrleitungen (PF1,PF2) geeignet ist.

9. Anordnung nach einem der vorhergehenden Ansprüche 1 bis 8, **dadurch gekennzeichnet, dass** der Dreiphasenwechselstrom-Transformator (42-44,55-62,64,65) gemäß der Norm DIN VDE 0532 die Schaltgruppe YNd5d11 aufweist.

10. Anordnung nach einem der vorhergehenden Ansprüche, **dadurch gekennzeichnet, dass** ein zusätzlicher Dreiphasenwechselstrom-Transformator (5) und/oder eine zusätzliche Symmetriereinrichtung (7) derart verschaltet sind, dass die Anordnung zur Versorgung zweier elektrisch getrennter Fahrleitungsabschnitte (19-22) mit je zwei Fahrleitungen mit Energie geeignet ist.

11. Anordnung nach Anspruch 10, **dadurch gekennzeichnet, dass** die zwei elektrisch getrennten Fahrleitungsabschnitte durch den zusätzlichen Dreiphasenwechselstrom-Transformator (5) und/oder die zusätzliche Symmetriereinrichtung (7) mit Energie versorgt werden können, wenn ein Dreiphasenwechselstrom-Transformator (4) und/oder eine Symmetriereinrichtung (6,7) ausfällt.

12. Anordnung nach einem der vorhergehenden Ansprüche, **dadurch gekennzeichnet, dass** die Symmetriereinrichtung (41) einen dreiphasigen selbstgeführten Spannungszwischenkreisstromrichter aufweist.

13. Anordnung nach einem der vorhergehenden Ansprüche, **dadurch gekennzeichnet, dass** die Symmetriereinrichtung (41) einen modulareren Multi-Level-Umrichter aufweist.

## Claims

1. Arrangement (40) having a railway power supply (PF1, PF2, NF1, NF2) for a railway track for connection to a three-phase supply network (L1, L2, L3),
wherein the arrangement has a three-phase AC transformer (42-44, 55-62, 64, 65) and a balancing device (41) for a uniform electric load of the three phases of the three-phase supply network (L1, L2, L3), wherein the three-phase AC transformer (42-44, 55-62, 64, 65) can be connected to the three-phase supply network (L1, L2, L3) on the primary side and is connected to the balancing device (41) on the secondary side, wherein
the three-phase AC transformer (42-44, 55-62, 64, 65) is connected to the railway power supply,
**characterised in that**
the railway power supply has an autotransformer system with two contact lines (PF1, PF2) and two conductors (NF1, NF2) that are carried along the railway track in an insulated manner, wherein the two conductors (NF1, NF2) that are carried along in an insulated manner are connected to the balancing device (41).

2. Arrangement according to claim 1, **characterised in that** the three-phase AC transformer is a three-winding transformer (42-44, 55-62, 64, 65).

3. Arrangement according to claim 1 or 2, **characterised in that** the three-phase AC transformer (42-44, 55-62, 64, 65) has a star connection (42-44) on the primary side.

4. Arrangement according to claim 2 or 3, **characterised in that** the three-phase AC transformer (42-44, 55-62, 64, 65) has a first delta connection (55, 56, 64) on the secondary side which causes a phase shift of the voltage of 150° with respect to the primary side.

5. Arrangement according to claim 4, **characterised in that** the three-phase AC transformer (42-44, 55-62, 64, 65) on the secondary side has a second delta connection (57, 58, 65) which causes a phase shift of the voltage of 330° with respect to the primary side.

6. Arrangement according to claim 5, **characterised in that** the connection point of the first (55, 56, 64) and second delta connection (57, 58, 65) is connected to the earth potential (51) and to the balancing device (41).

7. Arrangement according to one of the claims 4 to 6, **characterised in that** the three-phase AC transformer (42-44, 55-62, 64, 65) with its first delta connection (55, 56, 64) is connected to the balancing device (41) and is suitable for supplying the two conductors (NF1, NF2) that are carried along the railway track in an insulated manner.

8. Arrangement according to one of the claims 5 to 7, **characterised in that** the three-phase AC transformer (42-44, 55-62, 64, 65) with its second delta connection (57, 58, 65) is suitable for supplying the two contact lines (PF1, PF2).

9. Arrangement according to one of the preceding claims 1 to 8, **characterised in that** the three-phase AC transformer (42-44, 55-62, 64, 65) comprises the vector group YNd5dll according to the standard DIN VDE 0532.

10. Arrangement according to one of the preceding claims, **characterised in that** an additional three-phase AC transformer (5) and/or an additional balancing device (7) are connected such that the arrangement is suitable for supplying two electrically separate contact line sections (19-22), each with two contact lines, with energy.

11. Arrangement according to claim 10, **characterised in that** the two electrically separate contact line sections can be supplied with energy by the additional three-phase AC transformer (5) and/or the additional balancing device (7) if a three-phase AC transformer (4) and/or a balancing device (6, 7) fails.

12. Arrangement according to one of the preceding claims, **characterised in that** the balancing device (41) has a three-phase self-commutated voltage-controlled converter.

13. Arrangement according to one of the preceding claims, **characterised in that** the balancing device (41) has a modular multilevel converter.

## Revendications

1. Montage (40) comprenant une alimentation (PF1, PF2, NF1, NF2) en courant de traction d'une section de voie pour le raccordement à un réseau (L1, L2, L3) d'alimentation triphasé, dans lequel le montage a un transformateur (42 à 44, 55 à 62, 64, 65) de courant alternatif triphasé et un dispositif (41) de symétrisation d'une charge électrique uniforme des trois phases du réseau (L1, L2, L3) d'alimentation triphasé, le transformateur (42 à 44, 55 à 62, 64, 65) de courant alternatif triphasé pouvant être relié du côté primaire au réseau (L1, L2, L3) d'alimentation triphasé et étant relié du côté secondaire au dispositif (41) de symétrisation, dans lequel
le transformateur (42 à 44, 55 à 62, 64, 65) de courant alternatif triphasé est connecté à l'alimentation en courant de traction,
**caractérisé en ce que**
l'alimentation en courant de traction a un système d'autotransformateur ayant deux caténaires (PF1, PF2) et deux conducteurs (NF1, NF2) entrainés en étant isolés le long de section de voie, les deux conducteurs (NF1, NF2), entraînés en étant isolés, étant reliés au dispositif (41) de symétrisation.

2. Montage suivant la revendication 1, **caractérisé en ce que** le transformateur de courant alternatif triphasé est un transformateur (42 à 44, 55 à 62, 64, 65) à trois enroulements.

3. Montage suivant la revendication 1 ou 2, **caractérisé en ce que** le transformateur (42 à 44, 55 à 62, 64, 65) de courant alternatif triphasé a un montage (42 à 44) en étoile du côté primaire.

4. Montage suivant la revendication 2 ou 3, **caractérisé en ce que** le transformateur (42 à 44, 55 à 62, 64, 65) de courant alternatif triphasé a du côté secondaire un premier montage (55, 56, 64) en triangle, qui provoque un déphasage de la tension de 150° par rapport au côté primaire.

5. Montage suivant la revendication 4, **caractérisé en ce que** le transformateur (42 à 44, 55 à 62, 64, 65) de courant alternatif triphasé a du côté secondaire un deuxième montage (57, 58, 65) en triangle, qui provoque un déphasage de la tension de 330° par rapport au côté primaire.

6. Montage suivant la revendication 5, **caractérisé en ce que** le point de liaison du premier (55, 56, 64) et du deuxième montages (57, 58, 65) en triangle est relié au potentiel (51) de terre et au dispositif (41) de symétrisation.

7. Montage suivant l'une des revendications 4 à 6, **caractérisé en ce que** le transformateur (42 à 44, 55 à 62, 64, 65) de courant alternatif triphasé est relié par son premier montage (55, 56, 64) en triangle au dispositif (41) de symétrisation et est propre à l'alimentation des deux conducteurs (NF1, NF2) entrainés de manière isolée le long de la section de voie.

8. Montage suivant l'une des revendications 5 à 7, **caractérisé en ce que** le transformateur (42 à 44, 55 à 62, 64, 65) de courant alternatif triphasé est propre par son deuxième montage (57, 58, 65) en triangle à l'alimentation des deux caténaires (PF1, PF2).

9. Montage suivant l'une des revendications 1 à 8 précédentes, **caractérisé en ce que** le transformateur (42 à 44, 55 à 62, 64, 65) de courant alternatif triphasé a suivant la norme DIN VDE 0532 le groupe de coupure YNd5d11.

10. Montage suivant l'une des revendications précédentes, **caractérisé en ce qu'**un transformateur (5) de courant alternatif triphasé supplémentaire et/ou un dispositif (7) de symétrisation supplémentaire sont montés de manière à ce que le montage soit propre à l'alimentation en courant de deux parties (19 à 22) de caténaires séparées électriquement par respectivement deux caténaires.

11. Montage suivant la revendication 10, **caractérisé en ce que** les deux parties de caténaires séparées électriquement peuvent être alimentées en courant par le transformateur (5) de courant alternatif triphasé supplémentaire et/ou par le dispositif (7) de symétrisation supplémentaire si un transformateur (4) de courant alternatif triphasé et/ou un dispositif (6, 7) de symétrisation est défaillant.

12. Montage suivant l'une des revendications précédentes, **caractérisé en ce que** le dispositif (41) de symétrisation a un convertisseur à circuit intermédiaire de tension triphasé à commutation autonome.

13. Montage suivant l'une des revendications précédentes, **caractérisé en ce que** le dispositif (4) de symétrisation a un onduleur modulaire à plusieurs niveaux.
